# EUROPEAN PATENT SPECIFICATION

(11) **EP 4 476 191 B1**
(45) Date of publication and mention of the grant of the patent: **04.03.2026**
(21) Application number: 23708549.3
(22) Date of filing: 08.02.2023
(51) Int. Cl.: C04B 28/06, C04B 28/04, C04B 28/10

(54) **METHOD FOR THE PRODUCTION OF A CEMENTITIOUS MATERIAL**
VERFAHREN ZUR HERSTELLUNG EINES ZEMENTMATERIALS
PROCÉDÉ DE PRODUCTION D'UN MATÉRIAU CIMENTAIRE

(30) Priority: 09.02.2022 IT 202200002309
(43) Date of publication of application: 18.12.2024
(73) Proprietor: Buzzi S.P.A., 15033 Casale Monferrato (AL) (IT); Hinfra S.r.l., 15033 Casale Monferrato (AL) (IT)
(72) Inventor: CANONICO, Fulvio, 10143 Torino (IT); CAPELLI, Livio, 15030 Rosignano Monferrato (Alessandria) (IT); BERTOLA, Federica, 1040 Etterbeek (BE); GUANZIROLI, Stefano, 22036 Erba (Como) (IT)
(74) Representative: Fioravanti, Corrado
(86) International application number: PCT/IB2023/051119
(87) International publication number: WO 2023/152653

(56) References cited:
- WO-A1-2016/053319
- WO-A1-2017/106922
- GB-A- 2 166 430
- US-A- 3 973 978

## Description

The present invention relates to the field of cementitious materials containing aggregates, such as concrete and mortar.

In many building applications it is necessary to use cementitious materials which develop high mechanical resistance in the short term. For these applications, mortars and concretes are typically used that contain special cements different from the more conventional Portland cements, in particular sulfoaluminate (CSA) cements which develop significant mechanical resistance just a few hours after casting.

As known, Portland cements must meet the requirements of the harmonized European standard EN 197-1, which provides for a maximum SO₃ content of 4.5%.

On the other hand, sulfoaluminate cements are hydraulic binders having a high content - typically between 20% and 80% by weight - in Yeelimite, i.e. a mineralogical phase consisting of calcium sulfoaluminate (C4A3$). Other mineralogical phases usually present are dicalcium silicate, anhydrite, and tricalcium aluminate. Specifically, the presence of sulfates, such as gypsum or anhydrite, allows for the development of high mechanical resistance.

In the applications in question, attention must be paid to complying with the contradictory needs of rapid hardening of the mortar or concrete, so as to reach the required resistance in the short pre-set time, and their maintenance in a fluid state for the entire time in which they are subjected to working.

In particular, the construction industry requires that the so-called "rapid" mortars and concretes remain workable for a sufficiently long time, so as to avoid the risk that, for example, they harden in the cement mixer due to hitches or unexpected events that occur during the mixing process.

In practice, however, it is found that the development of high mechanical resistance in the short term, although in itself a relatively easy goal to achieve, leads to a rapid reduction in workability.

Document WO 2016/053319 A1 discloses a method of cementing comprising: providing a first set-delayed cement slurry comprising a pozzolanic cement and/or a Portland cement, water, and a first cement set retarder; providing a second set-delayed cement slurry comprising calcium-aluminate and a second cement set retarder; mixing the first slurry and the second slurry to form a cement composition; and allowing the cement composition to set.

An object of the present invention is therefore to provide cementitious materials capable of developing high mechanical resistance in the short term, without being subject to an equally rapid decline in their workability.

This object is achieved by virtue of a method for the production of a cementitious material, comprising the steps of:
- mixing 100 parts by weight of a first mixture with 8 to 12 parts by weight of water so as to obtain a first slurry, said first mixture comprising from 20 to 25% by weight of a cement chosen from the group consisting of Portland cement, limestone cement, slag cement, pozzolanic cement, composite cement and mixtures thereof, from 0 to 6% by weight of calcium sulfate, and from 65 to 80% by weight of inert material, and having a SO₃ content by weight from 1 to 4%,
- after the obtainment of the first slurry, mixing 100 parts by weight of a second mixture with 30 to 45 parts of water so as to obtain a second slurry, said second mixture comprising from 85 to 100% by weight of a cement chosen from the group consisting of calcium sulfoaluminate (CSA) cement, aluminous cement and mixtures thereof, and from 0 to 15% by weight of inert material, and having a SO₃ content from 5 to 13% by weight, and
- adding said second slurry to the first slurry with a ratio of 0.10 to 0.20 by weight between the second slurry and the first slurry, and mixing so as to obtain said cementitious material.

The latter is capable of developing high mechanical resistance in the short term, without being subject to an equally rapid decline in its workability.

It is possible that the second mixture further comprises up to 2% by weight of a retardant, up to 0.5% by weight of a lithium salt, and/or up to 2% by weight of CaO, and/or that at least one of the first and second mixtures further comprises up to 3% by weight of a fluidizer.

Advantageously, the CSA cement used has a C₄A₃$ content greater than 30% by weight.

In preferred embodiments of the method of the invention, the first mixture comprises 2 to 6% by weight of anhydrous calcium sulfate, and/or the second mixture comprises 1 to 5% by weight of inert material.

Further objects of the present invention are a concrete and respectively a mortar obtained with the method described above. In particular, such a concrete may be used by pouring into a formwork or by extrusion.

An exemplary embodiment of a method according to the invention is now provided for merely illustrative and non-limiting purposes, wherein all the indicated percentages are to be considered by weight unless expressly indicated otherwise.

### EXAMPLE

A first mixture consisting of the components listed in Table I and having a SO₃ content by weight equal to 2.7% is mixed with 175 g of water for 45 minutes, so as to obtain a first slurry.

**TABLE I**

| **Component** | **Quantity (g)** | **% on dry basis** | **% on total dry** | **% on total binder** |
|---|---|---|---|---|
| CEM 152.5 R | 420 | 22.63 | 20.46 | 59.8 |
| Anhydrite | 70 | 3.77 | 3.41 | 10.0 |
| CaO | 7 | 0.38 | 0.34 | 1.0 |
| Normal sand | 1350 | 72.74 | 65.77 | ------- |
| Sika P22 liquid fluidizer | 9 | 0.48 | 0.44 | 1.3 |

A second mixture consisting of the components listed in Table II is mixed with 75 g of water for 5 minutes, so as to obtain a second slurry. The CSA cement or binder of the second mixture contains 60% by weight of C₄A₃$. The SO₃ content of the second mixture is equal to 8.3% by weight.

**TABLE II**

| **Component** | **Quantity (g)** | **% on dry slurry** | **% on total dry** | **% on total binder** |
|---|---|---|---|---|
| Sulfoaluminate binder | 190 | 96.64 | 9.26 | 27.0 |
| Lithium carbonate | 0.7 | 0.36 | 0.03 | 0.1 |
| Citric acid | 1.4 | 0.71 | 0.07 | 0.2 |
| Sika P22 liquid fluidizer | 4.5 | 2.29 | 0.22 | 0.6 |

The second mixture is added to the first mixture and mixed for a period of time equal to 5 minutes until a homogeneous cementitious material is obtained, which is suitably fluid so that it may be easily poured into a formwork. The evolution of the compressive strength of the poured cementitious material over time is described in Table III.

**TABLE III**

| | |
|---|---|
| Compressive strength 2h (MPa) | 18.5 |
| Compressive strength 3h (MPa) | 25.3 |
| Compressive strength 24h (MPa) | 37.5 |
| Compressive strength 7 days (MPa) | 61.7 |
| Compressive strength 28 days (MPa) | 74.8 |

Without prejudice to the principle underlying the invention, details of implementation and embodiments may vary widely with respect to that which has been disclosed purely by way of example, without thereby departing from the scope of the invention as defined in the appended claims. In particular, the above mixtures may also contain any conventionally used additive, such as fluidizers, retarders, expanders and the like, alone or in combination.

## Claims

1. A method for the production of a cementitious material, comprising the steps of:
- mixing 100 parts by weight of a first mixture with 8 to 12 parts by weight of water so as to obtain a first slurry, said first mixture comprising from 20 to 25% by weight of a cement chosen from the group consisting of Portland cement, limestone cement, slag cement, pozzolanic cement, composite cement and mixtures thereof, from 0 to 6% by weight of calcium sulfate, and from 65 to 80% by weight of inert material, and having a SO₃ content by weight from 1 to 4%,
- after the obtainment of the first slurry, mixing 100 parts by weight of a second mixture with 30 to 45 parts of water so as to obtain a second slurry, said second mixture comprising from 85 to 100% by weight of a cement chosen from the group consisting of calcium sulfoaluminate (CSA) cement, aluminous cement and mixtures thereof, and from 0 to 15% by weight of inert material, and having a SO₃ content from 5 to 13% by weight, and
- adding said second slurry to the first slurry with a ratio of 0.10 to 0.20 by weight between the second slurry and the first slurry, and mixing so as to obtain said cementitious material.

2. The method according to claim 1, wherein said second mixture further comprises up to 2% by weight of a retarder, up to 0.5% by weight of a lithium salt, and/or up to 2% by weight of CaO.

3. The method according to claim 1 or 2, wherein at least one of said first and second mixtures further comprises up to 3% by weight of a fluidizer.

4. The method according to any one of the preceding claims, wherein said CSA cement has a C₄A₃$ content of more than 30% by weight.

5. The method according to any one of the preceding claims, wherein said first mixture comprises from 2 to 6% by weight of calcium sulfate.

6. The method according to any one of the preceding claims, wherein said second mixture comprises from 1 to 5% by weight of inert material.

7. A mortar obtainable by the method of any one of claims 1 to 6.

8. A concrete obtainable by the method of any one of claims 1 to 6.

9. Use of the concrete according to claim 8 by pouring into a formwork or extruding.

## Patentansprüche

1. Verfahren zur Herstellung eines Zementmaterials, umfassend die folgenden Schritte:
- Mischen 100 Gewichtsteile einer ersten Mischung mit 8 bis 12 Gewichtsteilen Wasser, um eine erste Suspension zu erhalten, wobei die erste Mischung von 20 bis 25 Gew.-% eines Zements, der aus der Gruppe bestehend aus Portlandzement, Kalksteinzement, Schlackenzement, puzzolanischem Zement, Verbundzement und deren Mischungen ausgewählt wird, von 0 bis 6 Gew.-% Calciumsulfat und von 65 bis 80 Gew.-% Inertmaterial enthält und einen SO₃-Gehalt von 1 bis 4 Gew.-% aufweist,
- nach dem Erhalten der ersten Suspension, Mischen von 100 Gewichtsteilen einer zweiten Mischung mit 30 bis 45 Gewichtsteilen Wasser, um eine zweite Suspension zu erhalten, wobei die zweite Mischung von 85 bis 100 Gew.-% eines Zements, der aus der Gruppe bestehend aus Calciumsulfoaluminat (CSA) Zement, Tonerdeschmellzzement und deren Mischungen ausgewählt wird und von 0 bis 15 Gew.-% Inertmaterial enthält und einen SO₃-Gehalt von 5 bis 13 Gew.-% aufweist, und
- Zugeben der zweiten Suspension zu der ersten Suspension mit einem Verhältnis von 0,10 bis 0,20 nach Gewicht zwischen der zweiten Suspension und der ersten Suspension und Mischen zur Herstellung des Zementmaterials.

2. Verfahren nach Anspruch 1, wobei die zweite Mischung ferner bis zu 2 Gew.-% eines Verzögerers, bis zu 0,5 Gew.-% eines Lithiumsals und/oder bis zu 2 Gew.-% von CaO enthält.

3. Verfahren nach Anspruch 1 oder 2, wobei mindestens eine der ersten und zweiten Mischungen ferner bis zu 3 Gew.-% eines Verflüssigers enthält.

4. Verfahren nach einem der vorhergehenden Ansprüche, wobei der CSA-Zement einen Gehalt von C₄A₃$ aufweist, der mehr als 30 Gew. % ist.

5. Verfahren nach einem der vorhergehenden Ansprüche, wobei die erste Mischung von 2 bis 6 Gew.-% Calciumsulfat enthält.

6. Verfahren nach einem der vorhergehenden Ansprüche, wobei die zweite Mischung von 1 bis 5 Gew.-% Inertmaterial enthält.

7. Mörtel, der durch das Verfahren nach einem der Ansprüche 1 bis 6 erhalten werden kann.

8. Beton, der durch das Verfahren nach einem der Ansprüche 1 bis 6 erhalten werden kann.

9. Verwendung des Betons nach Anspruch 8 durch Eingießen in eine Schalung oder durch Extrusion.

## Revendications

1. Procédé de production d'un matériau cimentaire, comprenant les étapes consistant à :
- mélanger 100 parties en poids d'un premier mélange avec 8 à 12 parties en poids d'eau de manière à obtenir une première boue, ledit premier mélange comprenant de 20 à 25% en poids d'un ciment choisi dans le groupe constitué par le ciment Portland, le ciment au calcaire, le ciment au laitier, le ciment pouzzolanique, le ciment composite et leurs mélanges, de 0 à 6% en poids de sulfate de calcium, et de 65 à 80% en poids de matériau inerte, et ayant une teneur en SO₃ en poids de 1 à 4%,
- à la suite de l'obtention de la première boue, mélanger 100 parties en poids d'un second mélange avec 30 à 45 parties d'eau de manière à obtenir une seconde boue, ledit second mélange comprenant de 85 à 100% en poids d'un ciment choisi dans le groupe constitué par le ciment sulfoaluminate de calcium (CSA), le ciment alumineux et leurs mélanges, et de 0 à 15% en poids de matériau inerte, et ayant une teneur en SO₃ de 5 à 13% en poids, et
- ajouter ladite seconde boue à la première boue avec un rapport de 0,10 à 0,20 en poids entre la seconde boue et la première boue, et mélanger de manière à obtenir ledit matériau cimentaire.

2. Procédé selon la revendication 1, dans lequel ledit second mélange comprend en outre jusqu'à 2% en poids de retardateur, jusqu'à 0,5% en poids d'un sel de lithium, et/ou jusqu'à 2% en poids de CaO.

3. Procédé selon la revendication 1 ou 2, dans lequel au moins l'un desdits premier et second mélanges comprend en outre jusqu'à 3% en poids de fluidifiant.

4. Procédé selon l'une quelconque des revendications précédentes, dans lequel ledit ciment CSA a une teneur en C₄A₃$ supérieure à 30% en poids.

5. Procédé selon l'une quelconque des revendications précédentes, dans lequel ledit premier mélange comprend de 2 à 6% en poids de sulfate de calcium.

6. Procédé selon l'une quelconque des revendications précédentes, dans lequel ledit second mélange comprend de 1 à 5% en poids de matériau inerte.

7. Mortier pouvant être obtenu par le procédé selon l'une quelconque des revendications 1 à 6.

8. Béton pouvant être obtenu par le procédé selon l'une quelconque des revendications 1 à 6.

9. Utilisation du béton selon la revendication 8 par coulage dans un coffrage ou extrusion.
